# EUROPÄISCHE PATENTSCHRIFT

(11) **EP 0 316 744 B1**
(45) Veröffentlichungstag und Bekanntmachung des Hinweises auf die Patenterteilung: **22.02.1995**
(21) Anmeldenummer: 88118656.3
(22) Anmeldetag: 09.11.1988
(51) Int. Cl.: G10K 11/16

(54) **Schalldämmteil mit Absorptionseigenschaften für Trennwand**
Sound dampening element with absorption properties for a separating wall
Elément d'atténuation du son ayant des propriétés d'absorption pour une paroi de séparation

(30) Priorität: 13.11.1987 DE 8715142 U
(43) Veröffentlichungstag der Anmeldung: 24.05.1989
(73) Patentinhaber: Stankiewicz GmbH, D-29352 Adelheidsdorf (DE)
(72) Erfinder: Wittenmayer, Klaus, Dipl.-Ing., D-3162 Uetze (DE); Prütz, Rainer, D-3101 Adelheidsdorf (DE)
(74) Vertreter: Melzer, Wolfgang, Dipl.-Ing.

(56) Entgegenhaltungen:
- EP-A- 0 195 923
- AU-B- 503 534
- FR-A- 2 126 995
- FR-A- 2 218 179
- GB-A- 2 167 020

## Beschreibung

Die Erfindung betrifft ein Schalldämmteil mit Absorptionseigenschaft für eine Trennwand.

Zur Erzeugung eines annehmbar niedrigen Geräuschpegels im Innenraum eines Kraftfahrzeuges wie eines Personenkraftwagens, ist es bekannt, vorzugsweise den Stirnwand-Boden-Bereich des Fahrzeuginnenraums mit schallisolierenden Abdeckungen zu versehen. Es ist ferner bekannt, auch motorraumseitig eine Schallisolation einzusetzen. Die GB-A-21 67 020 offenbart ein Schalldämmteil mit Absorptionseigenschaft für eine Trennwand, wobei für das Schalldämmteil eine Schwerschicht auf Polypropylenbasis oder Polyamidbasis vorgesehen ist, wobei das selbsttragende und wärmeformbeständige Schalldämmteil sehr nahe der Trennwand angeordnet ist. Es wird hierzu eine Schwerschicht mit unterschiedlichen Flächenmassen und unterschiedlichen akustischen Wirkungen, wie körperschalldämpfend und luftschalldämmend, gegebenenfalls auch in Verbindung mit einem motorraumseitigen Luftschallabsorber eingesetzt.

Aus der FR-A-2 126 995 ist ein Schalldämmteil bekannt mit einer Schwerchicht, die mit Schaumauflagen mit Verhautungen versehen ist.

Solche Anordnungen werden mit dem Untergrund, hier dem Karosserieblech, nämlich der Trennwand zwischen dem Fahrzeuginnenraum und dem Motorraum, der die Schallquelle enthält, fest verbunden. Hierzu ist es erforderlich, die Anordnung mittels eines heiß- schmelzenden Klebers aufzuschmelzen oder in üblicher Weise mittels eines üblichen Klebers aufzukleben. In beiden Fällen sind häufig zusätzlich mechanische Halterungen erforderlich.

Diese Art einer Anordnung ist aufgrund der schwierigen Aufbringungsart kostspielig, wobei ferner zu berücksichtigen ist, daß konstruktionsbedingt abmessungsmäßige Vorgaben einzuhalten sind.

Ausgehend hiervon ist es Aufgabe der vorliegenden Erfindung, ein Schalldämmteil mit Absorptionseigenschaft so auszubilden, daß es unter Einhaltung konstruktiver Vorgaben in kostengünstiger Weise in der gewünschten Lage zur Trennwand angeordnet werden kann.

Die Aufgabe wird durch die Merkmale des Anspruchs 1 gelöst.

Die Erfindung wird durch die Merkmale der Unteransprüche weitergebildet.

Für die Erfindung ist wesentlich, daß es ausreicht, die erfindungsgemäße Anordnung mechanisch zu stützen oder zu haltern, zusätzliche Verklebungen oder dgl. sind überflüssig. Hierdurch ist eine sehr kostengünstige Montage erzielbar.

Die anmeldungsgemäße Anordnung besteht aus einer zu dem Flächenteil, insbesondere einem Blech, zeigenden dünnen Schaumschicht, einer darauf folgenden Schwerschicht und einem hier aufkaschierten oder aufgeschäumten (hinterschäumten) Luftschallabsorber. Der aufkaschierte Absorber ist vorzugsweise ebenfalls eine Schaumschicht wie ein thermisch verpreßter Schaum. Sowohl der hier zum Flächenteil weisende Schaum als auch der zur Lärmquelle (zum Motor) weisende Schaum sind durch dünne Folien abgedeckt, die sowohl als Feuchtigkeitssperre dienen als auch die akustische Wirksamkeit erhöhen, was insbesondere für die Abdeckung des lärmquellenseitigen Schaums zutrifft. Wegen der konstruktiven Vorgaben ist die Einbautiefe der Anordnung auf im allgemeinen 10 bis 30 mm, vorzugsweise 20 bis 25 mm begrenzt. Die akustische Wirkung solcher dünnen Anordnungen ist daher ebenfalls berechenbar begrenzt, insbesondere, wenn aufgrund der vorliegenden Erfindung die bisher üblichen Aufschmelzprozesse entfallen, die zur zusätzlichen Nutzung körperschalldämpfender Eigenschaften führen. Bisher mußten zur Überwindung dieses Problems andere Methoden verwendet werden, etwa daß die zum Flächenteil weisende Schaumschicht gemäß der DE-PS 35 10 932 adhäsiv ausgebildet ist. Eine feste Verbindung, wie durch Aufkleben, ist jedoch bei der vorliegenden Erfindung nicht erforderlich. Die anmeldungsgemäße Anordnung kann auf Befestigungsstifte oder -bolzen aufgesteckt werden und/oder randseitig eingefaßt werden.

Es ist zu bemerken, daß wegen der sehr dicht am Blech befindlichen Schwerschicht, die jedoch durch den flächenteilseitigen Schaumstoff (durch die elastische Feder) von dem Flächenteil getrennt ist, ein Doppelwandsystem entsteht, das für die Fahrzeugakustik an sich ungünstige Eigenschaften besitzt. Wegen der frequenzmäßig hohen Abstimmung hinsichtlich der Resonanzfrequenz werden z.B. die niederfrequenten Anteile, die durch die Zündfrequenz des Motors bedingt sind, praktisch nur duch den sogenannten Masseneffekt beeinflußt. Im hochfrequenten Bereich oberhalb der Resonanzfrequenz ist mit akustischen Verlusten zu rechnen, die sich in verminderter Sprachverständlichkeit äußern. Durch die anmeldungsgemäße konkrete Anordnung der elastischen Feder zur Schwerschicht, des Abstandes der Schwerschicht zum Flächenteil und dadurch, daß eine Verklebung, also eine feste Verbindung zu dem Flächenteil entfällt, werden überraschenderweise diese an sich zu erwartenden Nachteile vermieden. Ferner ist wesentlich, daß die luftschalldämmende Anordnung zwar so nahe an dem Flächenteil angeordnet sein kann, daß die flächenteilseitige Abdeckung an dem Flächenteil anliegen kann, jedoch muß dies nicht sein, so können Sicken oder dgl. in dem Flächenteil in einfacher Weise ausgeglichen werden. Dabei ergibt sich aufgrund der einerseits Eigensteifigkeit, jedoch andererseits verbleibenden Elastizität, daß die Anordnung solchen Sickenverläufen in etwa folgt, derart, daß der Abstand zwischen der Schwerschicht und dem Flächenteil (bei einer Dicke der Schaumschicht von etwa 5 mm) 7 mm nicht überschreitet.

Die Erfindung wird anhand des in der Zeichnung dargestellten Ausführungsbeispiels näher erläutert. Es zeigen:
- Fig. 1: schematisch im Schnitt die Anordnung einer motorraumseitigen luftschalldämmenden Anordnung gemäß der Erfindung,
- Fig. 2: die Einzelheit II aus Fig. 1, nämlich die luftschalldämmende Anordnung im Schnitt.

Die Erfindung wird anhand ihrer Anwendung bei einem Kraftfahrzeug, insbesondere der Schallabsorption bezüglich von einem Motor M erzeugten Lärms gegenüber dem Innenraum I eines Kraftfahrzeuges erläutert, wobei zwischen Innenraum I und dem die Lärmquelle enthaltenden Raum des Kraftfahrzeugs als Flächenteil ein Blech 1 vorgesehen ist, wobei dieses Karosserie-Blech 1 überlicherweise eine Dicke zwischen 0,8 und 1 mm besitzt.

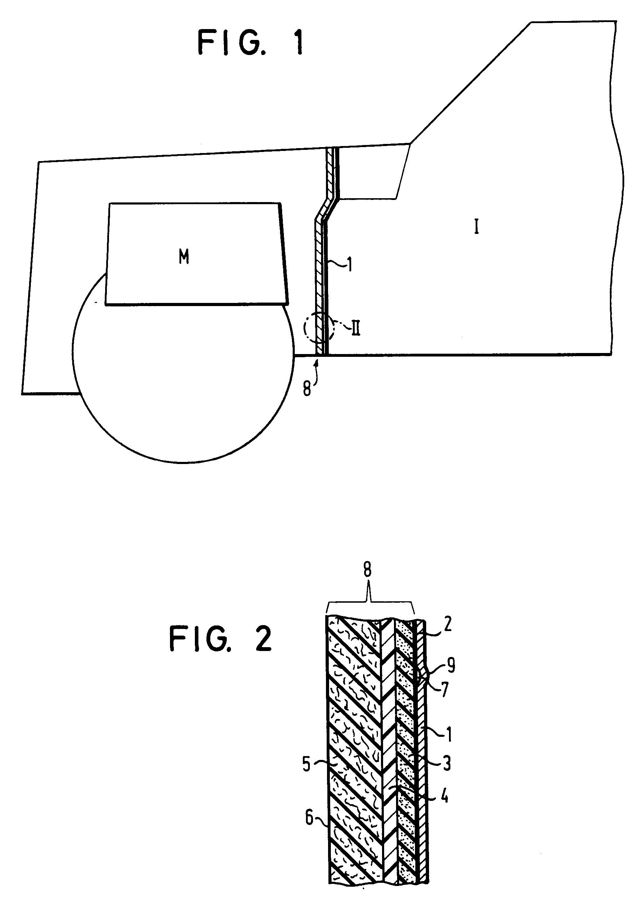

Daran schließt sich zum die Lärmquelle M gem. Fig. 1 weisenden Raum eine erfindungsgemäß ausgebildete luftschalldämmende Anordnung 8 entweder eng anliegend, oder mit geringem Abstand entsprechend dem Spalt 7 an, etwa zum Überbrücken einer Sicke 9 im Blech 1.

Diese Anordnung 8 weist eine zum Blech 1 weisende Folie 2 als Feuchtigkeitssperre zum nachfolgenden Schaum 3 auf, und zwar in einer Dicke von etwa 18 bis 20 »m. Es kann aber auch eine Verhautung, etwa eine PU-Verhautung gewählt sein.

Wie erwähnt, schließt sich daran eine Schaumschicht 3 mit vorzugsweise einer Dicke von etwa 5 mm an. Es kann sich hierbei um einen Schnittschaum oder einen Formschaum als akustisch wirksame Feder sowie zum Konturenausgleich und Vermeidung von Klappergeräuschen der nachfolgenden Schwerschicht 4 auf dem Blech 1 handeln.

Wie erwähnt, schließt sich daran eine Schwerschicht 4 an, und zwar vorzugsweise mit einer Flächenmasse zwischen 5 und 7 kgm⁻². Die Schwerschicht ist vorzugsweise auf Polypropylenbasis (EPDM-EVA) hergestellt. Die Schwerschicht 4 muß wegen des Einsatzes im hier gezeigten Anwendungsfall, nämlich im Motorraumbereich hohe Wärmeformbeständigkeit aufweisen, damit sie ihre selbsttragenden Eigenschaften auch bei den zu erwartenden Temperaturbelastungen von bis zu 130 °C nicht verliert. Die Schwerschicht 4 kann bei besonderen Anforderungen an die Wärmeformbeständigkeit auch auf Polyamidbasis oder auf PU-RIM-Basis hergestellt sein, so daß dann selbsttragende Eigenschaft bis zu 170 °C erzielt sind. Aufgrund der gewählten Materialbasis lassen sich solche Schwerschichten 4 im Spritzgießverfahren oder RIM-Verfahren kostengünstig herstellen, so daß sich der weitere Vorteil ergibt, daß notwendige Befestigungselemente auf der Schwerschicht 4 selbst angebracht werden können.

An die Schwerschicht 4 schließt sich eine weitere Schaumschicht 5 an, die absorbierende Eigenschaften besitzt. Die Schaumschicht 5 besteht vorzugsweise aus einem Schnittschaum mit einer Dichte von 30 kgm⁻³. Es kann auch ein Formschaun oder ein thermisch verpreßtes faseriges Material, wie z.B. Baumwollfaservlies, Glaswolle, Basalt, Steinwolle etc. mit sehr gutem akustischen Ergebnis verwendet sein, wenn deren Dichte im Bereich von 40 kgm⁻³ liegt. Versuchsergebnisse zeigen, daß auch Formschäume mit bis zu 150 kgm⁻³ verwendet werden können, daß jedoch bei höherer Dichte die Absorptionseigenschaft abnimmt, die Schalldämmung jedoch verbessert ist. Zusammenfassend zeigt sich bei leichteren Ausführungen des Schaums in der Schaumschicht 5 ein verbessertes, nämlich niedrigeres Innengeräusch für den Innenraum I.

Zur Lärmquelle, dem Motor M in Fig. 1, weisend schließt sich an die Schaumschicht 5 eine Abdeckung 6 aus Polyestervlies mit einer Flächenmasse von 150 gm⁻² oder auch aus PU-Folie mit 25 »m Dicke an.

Die Anordnung 8 kann über nicht dargestellte Befestigungsbolzen mit dem Blech 1 verbunden sein, sie kann randseitig eingespannt sein. Wesentlich ist, daß eine Verklebung der Anordnung 8 mit dem Blech 1 nicht durchgeführt ist, wodurch erheblicher Montageaufwand entfällt. Der geschilderte Aufbau der Anordnung 8 gestattet die Herstellung der Schwerschicht 4 im Spritzgießverfahren oder RIM-Verfahren mit beidseitiger Hinterschäumung zum Aufbringen der beiden Schaumschichten 3 und 5. Diese Vorgehensweise ist insbesondere für die Großserienfertigung von Vorteil. Kleinserien können kostengünstig und mit gleicher Wirkung dadurch erreicht werden, daß die Schwerschicht 4 im Tiefziehverfahren hergestellt wird und die Schaumschichten durch thermisch verpreßte Schäume erreicht werden. In gleicher Weise können auch Vliese mit entsprechenden akustischen Eigenschaften verwendet werden.

Die anmeldungsgemäße Anordnung eignet sich allgemein zur Schallisolation von Trennwänden zwischen einem Lärmerzeuger und einem zu schützenden Raum. Von besonderem Vorteil ist sie in der Automobilindustrie zur Schallisolation der motorraumseitigen Trennwand eines Kraftfahrzeuges. Diese verstärkte motorraumseitige Schallisolation befriedigt ein starkes Bedürfnis der Automobilindustrie, die sowohl zur Minderung der Außengeräusche alle verfügbaren Flächen nutzen muß, als auch zur Minderung der Innengeräusche eine möglichst leichtgewichtige Innenisolation erzielen muß. Die Wirkungen der Außen- und der Innenisolation müssen aufeinander abgestimmt sein. Dies wird bei der vorliegenden Erfindung gewährleistet, wobei überraschend bei einer Abmagerung der Innenisolation gleichzeitig ein gegenüber dem Stand der Tecknik verbesserter Geräuschkomfort erzielt wird.

## Patentansprüche

1. Selbsttragendes Schalldämmteil (8) mit Absorptionseigenschaft für eine Trennwand (1), das als Masse-Feder-System aufgebaut ist, mit einer Schwerschicht (4) auf Polypropylenbasis oder auf Polyamidbasis oder auf PV-Basis,
dadurch **gekennzeichnet**,
daß die Schwerschicht (4) beidseitig mit Schaumauflagen (3,5) versehen ist, die ihrerseits nach außen verhautet (2,6) oder mit Folienabdeckungen versehen sind, so daß sich Wärmeformbeständigkeit ergibt, und
daß das Schalldämmteil (8) aufgrund konstruktiver Vorgaben sehr nahe zur Trennwand (1) jedoch ohne Verklebung bei Anlage angeordnet ist, wordurch trotz hierdurch bedingter ungünstig hoch liegender Resonanzfrequenz des Schalldämmteil(8)-Trennwand(1)-Systems die durch diese bedingten akustischen Verluste kompensiert werden, wobei
die Flächenmasse der Schwerschicht (4) im Bereich von 5 bis 7 kgm⁻² liegt, die Dicke der als akustische Feder wirkenden Schaumschicht (3) etwa 5 mm beträgt, und die zur Lärmquelle (M) weisende als Absorber wirkende Schaumauflage (5) aus thermisch verpreßtem Schnittschaum mit einer Dichte von 30 kgm⁻³ oder einem Formschaum mit einer Dichte zwischen 40 kgm⁻³ und 150 kgm⁻³ besteht.

2. Schalldämmteil mit Absorptisonseigenschaft nach Anspruch 1,
dadurch **gekennzeichnet**,
daß die Schaumauflage (5) aus einem Formschaum mit einer Dichte im Bereich von 40 kgm⁻³ besteht.

3. Schalldämmteil nach Anspruch 1 oder 2,
dadurch **gekennzeichnet**,
daß mindestens eine der Schaumauflagen (3,5) aus Vliesmaterial mit entsprechenden akustischen Eigenschaften besteht.

4. Schalldämmteil nach einem der Ansprüche 1 bis 3,
dadurch **gekennzeichnet**,
daß die Schwerschicht (4) von der Trennwand (1) einen Abstand von bis zu 7 mm aufweist.

5. Schalldämmteil nach einem der Ansprüche 1 bis 4,
dadurch **gekennzeichnet**,
daß es an der Trennwand (1) aufgeständert gehalten ist.

6. Schalldämmteil nach einem der Ansprüche 1 bis 4,
dadurch **gekennzeichnet**,
daß es randseitig zu der Trennwand (1) gehalten ist.

7. Schalldämmteil nach einem der Ansprüche 1 bis 6,
dadurch **gekennzeichnet**,
daß die Trennwand die motorraumseitige Trennwand (Blech 1) eines Kraftfahrzeugs ist.

8. Schalldämmteil nach einem der Ansprüche 1 bis 6,
dadurch **gekennzeichnet**,
daß die Trennwand zwischen einem Lärmerzeuger (Lärmquelle M) und einem zu schützenden Raum (I) angeordnet ist.

## Claims

1. Self-supporting sound-dampening part (8) having absorption properties, for a separating wall (1), which sound-dampening part is constructed as a mass-spring system, having a polypropylene-based or polyamide-based or PV-based dense layer (4),
characterised in that the dense layer (4) is provided on both sides with foam layers (3, 5) which in turn are provided on the outside with skins (2, 6) or foil coverings so that thermal stability results, and
in that the sound-dampening part (8) is arranged, on the basis of constructive guidelines, very close to the separating wall (1), although without gluing during installation, as a result of which, despite the necessity of an unfavourably high resonant frequency of the sound-dampening (8)-separating wall (1) system, the acoustic losses associated with this high resonant frequency are compensated, wherein
the surface mass of the dense layer (4) is in the region of 5 to 7 kgm⁻², the thickness of the foam layer (3) acting as an acoustic spring amounts to approximately 5 mm, and the foam layer (5) which faces towards the noise source (M) and which acts as an absorber consists of thermally pressed chopped foam with a density of 30 kgm⁻³ or moulded foam with a density of between 40 kgm⁻³ and 150 kgm⁻³.

2. Sound-dampening part having absorption properties according to claim 1,
characterised in that
the foam layer (5) consists of moulded foam with a density in the region of 40 kgm⁻³.

3. Sound-dampening part according to claim 1 or 2,
characterised in that
at least one of the foam layers (3, 5) consists of bonded fibre material with suitable acoustic properties.

4. Sound-dampening part according to claims 1 to 3,
characterised in that the dense layer (4) is at a distance of up to 7 mm from the separating wall (1).

5. Sound-dampening part according to claims 1 to 4,
characterised in that it is held against the separating wall (1) with elevation.

6. Sound-dampening part according to one of claims 1 to 4,
characterised in that it is held edge-wise to the separating wall (1).

7. Sound-dampening part according to claims 1 to 6,
characterised in that the separating wall is the separating wall (steel plate 1) on the engine compartment side of a motor vehicle.

8. Sound-dampening part according to one of claims 1 to 6,
characterised in that the separating wall is arranged between a noise generator (noise source M) and a compartment (I) to be shielded.

## Revendications

1. Elément insonorisant auto-porteur (8) avec des propriétés d'absorption, pour une cloison (1), cet élément étant sous la forme d'un système masse-ressort, avec une couche lourde (4) à base de polypropylène, de polyamide ou de polyvinyle,
**caractérisé** en ce que :
- la couche lourde (4) est munie sur ses deux faces de revêtements en mousse (3, 5), qui sont de leur côté protégés vers l'extérieur par une peau (2, 6) ou par des couvertures sous la forme de films, de telle sorte qu'il en résulte la stabilité de forme à la chaleur, et
- l'élément insonorisant (8) est disposé, en raison des prescriptions constructives, très près de la cloison (1), mais sans collage lors du montage, ce qui fait que, malgré que ceci provoque une fréquence de résonance défavorablement haute du système composé de l'élément insonorisant (8) et de la cloison (1), les pertes acoustiques qui en résultent sont compensées,
le grammage de la couche lourde (4) étant de l'ordre de 5 à 7 kg/m², l'épaisseur de la couche de mousse (3) agissant comme ressort acoustique étant d'environ 5 mm, et le revêtement de mousse (5) dirigé vers la source de bruit (M) et agissant comme absorbeur étant constitué de mousse découpée comprimée thermiquement, d'une densité de 30 kg/m³, ou d'une mousse moulée ayant une densité entre 40 kg/m³ et 150 kg/m³.

2. Elément insonorisant ayant des propriétés d'absorption selon la revendication 1, caractérisé en ce que le revêtement de mousse (5) consiste en une mousse moulée ayant une densité de l'ordre de 40 kg/m³.

3. Elément insonorisant selon la revendication 1 ou 2, caractérisé en ce qu'au moins un des revêtements de mousse (3, 5) est constitué d'un matériau feutré ayant des propriétés acoustiques appropriées.

4. Elément insonorisant selon une des revendications 1 à 3, caractérisé en ce que la couche lourde (4) présente une distance allant jusqu'à 7 mm par rapport à la cloison (1).

5. Elément insonorisant selun une des revendications 1 à 4, caractérisé en ce qu'il est tenu debout contre la cloison (1).

6. Elément insonorisant selon une des revendications 1 à 4, caractérisé en ce qu'il est tenu par ses bords sur la cloison (1).

7. Elément insonorisant selon une des revendications 1 à 6, caractérisé en ce que la cloison est la cloison (tôle 1) du côté du compartiment du moteur d'un véhicule à moteur.

8. Elément insonorisant selon une des revendications 1 à 6, caractérisé en ce que la cloison est disposée entre une source de bruit (M) et un espace (I) à protéger.
